# FASCICULE DE BREVET EUROPEEN

(11) **EP 0 770 036 B1**
(45) Date de publication et mention de la délivrance du brevet: **16.09.1998**
(21) Numéro de dépôt: 95925016.8
(22) Date de dépôt: 06.07.1995
(51) Int. Cl.: B67D 5/60, B65G 53/56, F16L 27/08

(54) **INSTALLATION RACLABLE DE CONNEXION SELECTIVE MANUELLE**
MOLCHFÄHIGE EINRICHTUNG ZUR WAHLWEISEN MANUELLEN VERBINDUNG
SCRAPABLE SELECTIVE MANUAL CONNECTION APPARATUS

(30) Priorité: 11.07.1994 FR 9408555
(43) Date de publication de la demande: 02.05.1997
(73) Titulaire: FMC EUROPE S.A., F-89107 Sens Cédex (FR)
(72) Inventeur: LE DEVEHAT, Eugène, F-89100 Saligny (FR)
(74) Mandataire: Rinuy, Santarelli
(86) Numéro de dépôt international: FR9500904
(87) Numéro de publication internationale: WO9601785

(56) Documents cités:
- EP-A- 0 254 764
- EP-A- 0 446 123
- DE-A- 3 002 819
- FR-A- 2 680 559

## Description

L'invention concerne une installation de connexion sélective de l'une quelconque d'une pluralité de canalisations d'entrée à l'une quelconque d'unepluralité de canalisations de sortie. Elle vise notamment, mais non exclusivement, la circulation de produits pétroliers.

Dans la plupart des installations de production d'huile ou de produits chimiques, il est nécessaire de réaliser de multiples connexions temporaires, afin de transférer des produits de nature différente dans des tuyauteries communes. Il faut pour cela pouvoir connecter l'une quelconque de plusieurs lignes d'entrée à l'une quelconque de plusieurs lignes de sortie, les nombres de lignes d'entrée et de sortie pouvant être importants, par exemple de l'ordre d'une vingtaine, voire plus.

De telles connexions multiples sont indispensables notamment dans le cas d'installations raclables (c'est-à-dire dont la section interne de passage de fluide reste partout la même).

Diverses solutions existent pour réaliser ces connexions.

La première consiste à utiliser des liaisons souples (flexibles).

D'autres solutions existent également, généralement automatiques, qui utilisent des connexions télescopiques, ce qui peut poser des problèmes du point de vue raclage.

La Demanderesse a déjà proposé les solutions suivantes :
- connexions avec doubles liaisons articulées dans deux plans perpendiculaires (voir la demande de brevet 90-03050 du 9 Mars 1990),
- connexions avec éléments tubulaires multiples mobiles dans deux plans superposés à la manière d'éléments à bouliers et reliés par un double coude (voir la demande de brevet FR-2.680.559 du 21 Août 1991).

Ces solutions automatiques ont l'inconvénient d'être relativement chères et par conséquent ne peuvent pas toujours être prises en considération dans certains projets pour des raisons budgétaires.

Il s'avère donc nécessaire de proposer des solutions économiques, éventuellement manuelles, pour réaliser des connexions multiples (multiples lignes d'entrée raccordées à de multiples lignes de sortie) tout en autorisant les opérations de raclage.

Ces solutions doivent être réalisées avec des éléments rigides, manoeuvrables sans efforts physiques importants, et raclables.

La connexion simultanée de toutes les lignes d'entrée (ou de toutes les lignes de sortie si elles sont moins nombreuses) doit être possible, dans un ordre quelconque, et cela sans avoir à déconnecter une ou plusieurs lignes déjà en service.

L'invention propose à cet effet une installation de connexion sélective provisoire de l'un quelconque d'une pluralité ordonnée de premiers tronçons fixes ayant un même diamètre interne, à l'un quelconque d'une pluralité ordonnée de seconds tronçons fixes ayant ce diamètre interne comportant :
- un premier support disposé verticalement auquel est fixée la pluralité de tronçons fixes, chacun à un niveau spécifique,
- une pluralité ordonnée de canalisations articulées ayant ce diamètre interne, déformables indépendamment les unes des autres dans des plans horizontaux superposés, à chaque premier tronçon fixe étant connectée l'une, spécifique, des canalisations articulées,
- une première pluralité ordonnée de premiers tronçons d'accouplement ayant ce diamètre interne et présentant des brides d'accouplement longeant un plan fictif d'accouplement (P), le nombre de premiers tronçons d'accouplement étant égal au nombre de premiers tronçons fixes,
- un support auquel est fixée la seconde pluralité ordonnée de seconds tronçons fixes,
- une seconde pluralité ordonnée de seconds tronçons d'accouplement ayant ce diamètre interne de présentant des brides d'accouplement parallèles au plan fictif d'accouplement, le nombre de ces seconds tronçons d'accouplement étant égal au nombre des seconds tronçons fixes,
- une pluralité de coupleurs adaptés chacun à accoupler un premier tronçon d'accouplement et un second tronçon d'accouplement,
cette installation étant caractérisée en ce que :
- chacun des seconds tronçons d'accouplement est connecté directement à l'un des seconds tronçons fixes, ces seconds tronçons d'accouplement ayant des positions fixes parallèlement au plan fictif d'accouplement en étant réparties de façon régulière en regard d'une ligne de référence sensiblement horizontale contenue dans ce plan et ayant un niveau inférieur aux niveaux des premiers tronçons,
- chacune des canalisations articulées est raccordée, à l'opposé du premier tronçon auquel elle est connectée, à une colonne tubulaire ayant ce diamètre interne et s'étendant verticalement jusqu'à l'un respectif des premiers tronçons d'accouplement, les longueurs respectives des colonnes tubulaires étant telles que les premiers tronçons d'accouplement soient tous sensiblement au même niveau, chaque ensemble formé d'une canalisation, d'une colonne tubulaire et d'un premier tronçon d'accouplement étant muni de moyens de limitation en débattement de cet ensemble tout au long de la ligne de référence à l'intérieur d'une plage de débattement horizontal donnée de part et d'autre de cette ligne de référence,
- l'écartement entre seconds tronçons d'accouplement adjacents et la plage de débattement donnée étant supérieur au diamètre des premiers tronçons d'accouplement.

Selon des dispositions préférées :
- le plan fictif d'accouplement est horizontal,
- chaque canalisation articulée est formée de trois tronçons rigide articulés les uns aux autres,
- la ligne de référence est sensiblement rectiligne,
- les extrémités des canalisations articulées sont engagées dans des chariots respectifs montés coulissants sur des rails sensiblement horizontaux et coplanaires dans un plan vertical sensiblement parallèle à la ligne de référence,
- ladite plage de débattement donnée est délimitée au moins en partie par des butées portées par lesdites extrémités et coopérant avec lesdits chariots,
- le support vertical et la pluralité de premiers tronçons fixes sont répartis en deux lots disposés de part et d'autre d'un plan vertical passant par la ligne rectiligne de référence,
- la ligne de référence est une portion de cercle,
- chaque canalisation articulée est formée de trois tronçons rigides articulés et comporte une biellette d'entretoisement articulée sur les tronçons rigides extrêmes de même longueur que le tronçon rigide médian et formant avec des tronçons rigides un pantographe,
- le tronçon rigide extrême auquel est connecté une colonne tubulaire est orienté radialement,
- les seconds tronçons d'accouplement sont montés de façon télescopique sur les seconds tronçons fixes, perpendiculairement au plan fictif d'accouplement,
- ces seconds tronçons télescopiques sont munis de leviers de manoeuvre qui sont basculants,
- les seconds tronçons d'accouplement comportent deux mâchoires articulées en de premières extrémités sur lesdits seconds tronçons d'accouplement perpendiculairement au plan fictif d'accouplement et un dispositif de verrouillage adapté à maintenir de secondes extrémités de ces mâchoires en une configuration fermée,
- dispositif de verrouillage comprend des moyens de serrage,
- les moyens de serrage sont commandés par un levier de manoeuvre,
- le dispositif de verrouillage est articulé sur la seconde extrémité de l'une des mâchoires,
- les seconds tronçons d'accouplement comportent des détecteurs d'identification pour identifier les premiers tronçons d'accouplement,
- un bouchon d'obturation est interposé entre un premier tronçon d'accouplement et un second tronçon d'accouplement maintenu en position basse.

Des objets, caractéristiques et avantages de l'invention ressortent de la description qui suit, donnée à titre d'exemple non limitatif, en regard des dessins annexés sur lesquels :
- la figure 1 est une vue de côté d'une installation de connexion sélective provisoire conforme à l'invention,
- la figure 2 en est une vue de face, selon la flèche II de la figure 1,
- la figure 3 en est une vue de dessus,
- la figure 4 en est une vue partielle de côté, montrant plusieurs colonnes tubulaires en cours de déplacement,
- la figure 5 est une vue en plan d'une partie des seconds tronçons d'accouplement et de trois premiers tronçons d'accouplement en cours de déplacement,
- la figure 6 est une vue de côté d'une autre installation de connexion sélective provisoire, qui est une version double de l'installation des figures 1 à 5,
- la figure 7 est une vue de dessus d'encore une autre installation de connexion sélective provisoire, dans laquelle les seconds tronçons fixes sont en cercle autour des premiers tronçons fixes,
- la figure 8 est une vue partielle de côté, montrant plusieurs colonnes tubulaires en cours de déplacement,
- la figure 9 est une vue partielle en plan de cette autre installation, similaire à la figure 5,
- la figure 10 est une vue partielle de côté de l'une des canalisations articulées de la figure 7,
- la figure 11 en est une vue de dessus,
- la figure 12 est une vue de côté en coupe partielle d'un premier tronçon d'accouplement relié à un second tronçon d'accouplement par un coupleur,
- la figure 13 est une vue de côté en coupe partielle des tronçons de la figure 12 en configuration de dégagement,
- la figure 14 est une vue de côté en coupe partielle des tronçons de la figure 12 en configuration de repos,
- la figure 15 est une vue de dessus avec arrachement partiel du coupleur des figures 12 à 14,
- la figure 16 est une vue partielle selon la flèche XVI de la figure 15, et
- la figure 17 est une vue en coupe selon la ligne XVII-XVII de la figure 14.

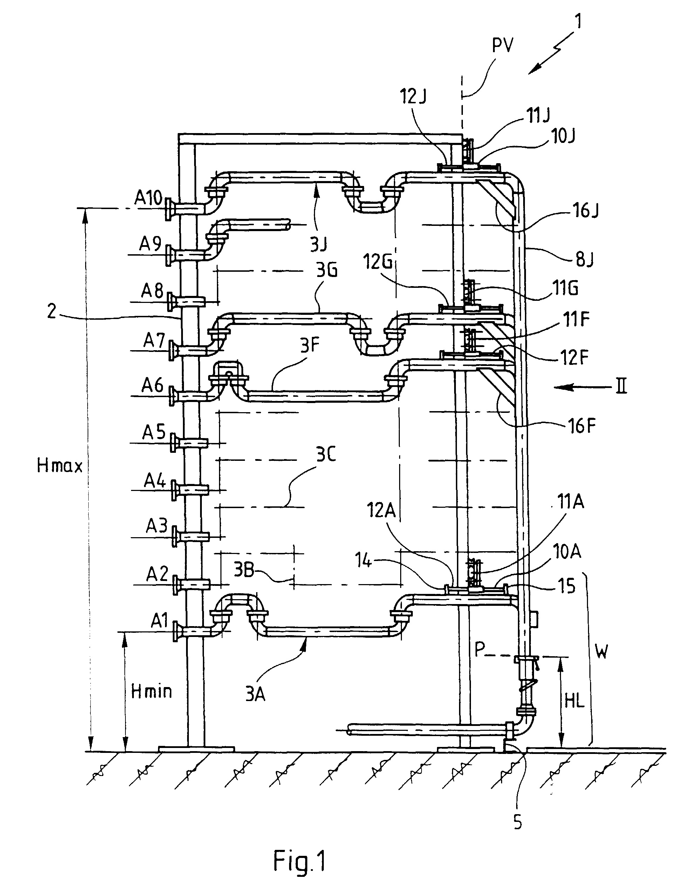

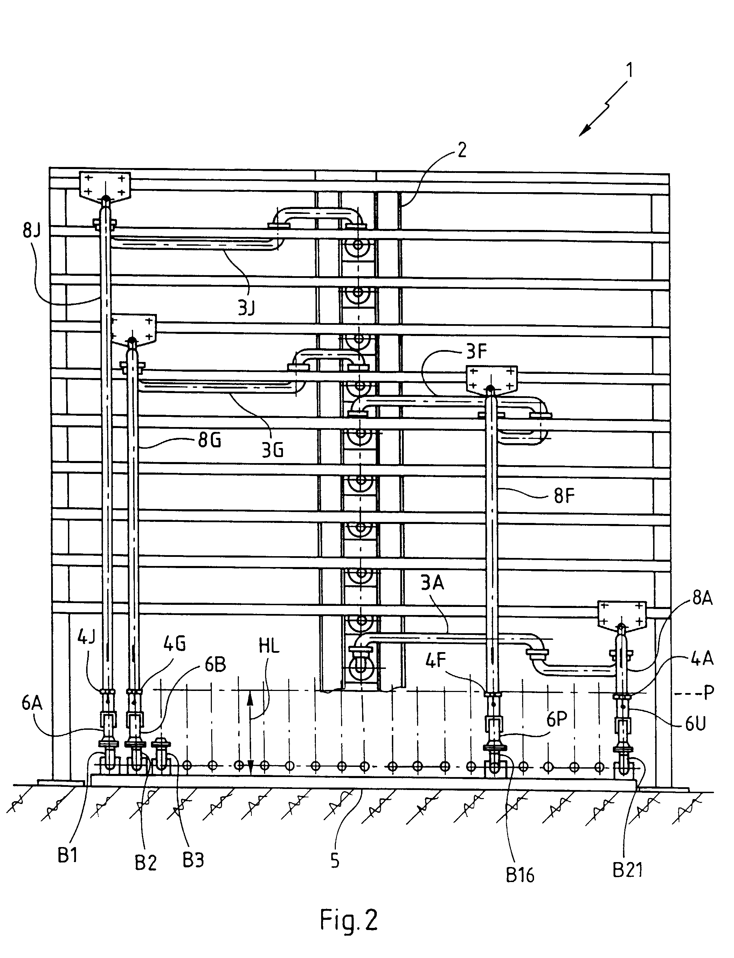

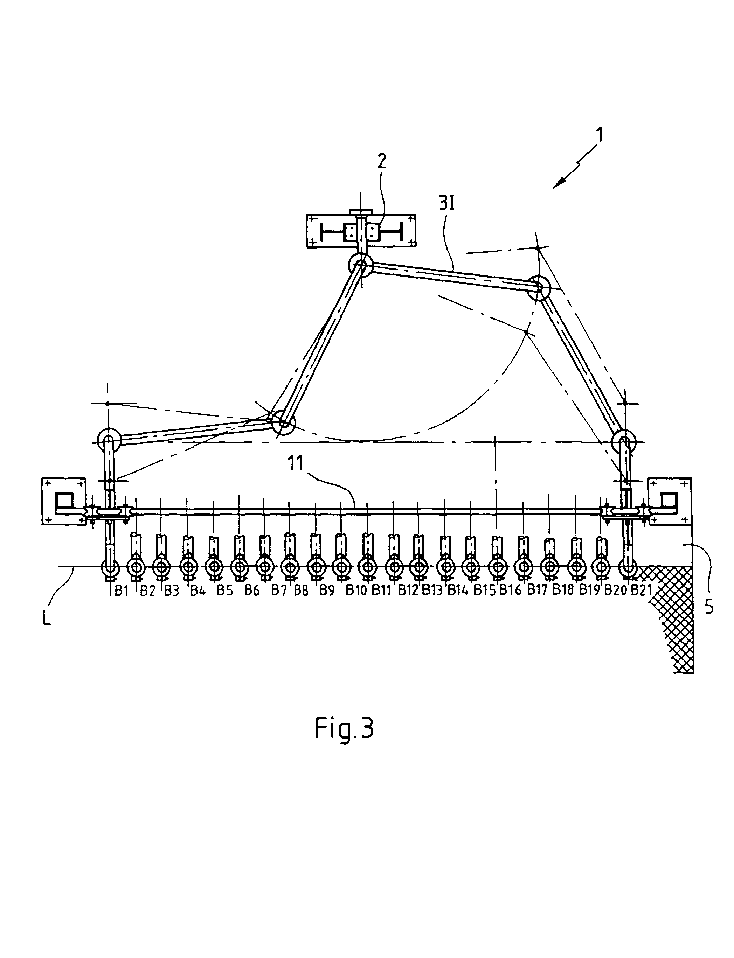

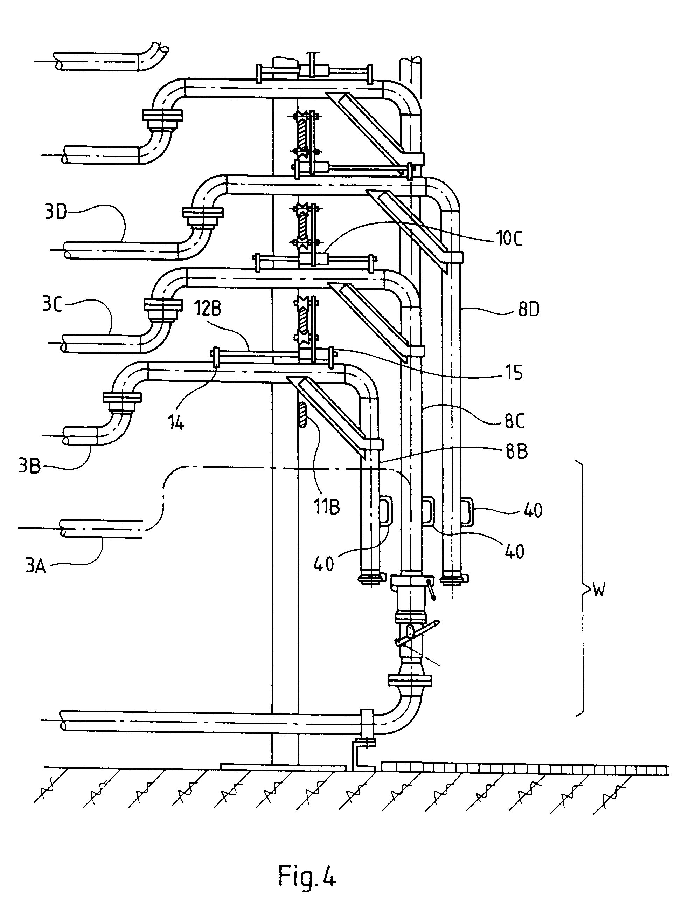

Les figures 1 à 5 représentent dans son ensemble une installation de connexion sélective provisoire de l'un quelconque d'une pluralité ordonnée de premiers tronçons fixes A1, A2 .... A10 ayant un même diamètre interne, à l'un quelconque d'une pluralité ordonnée de seconds tronçons fixes B1, B2, B3 .... B 21 ayant ce même diamètre interne.

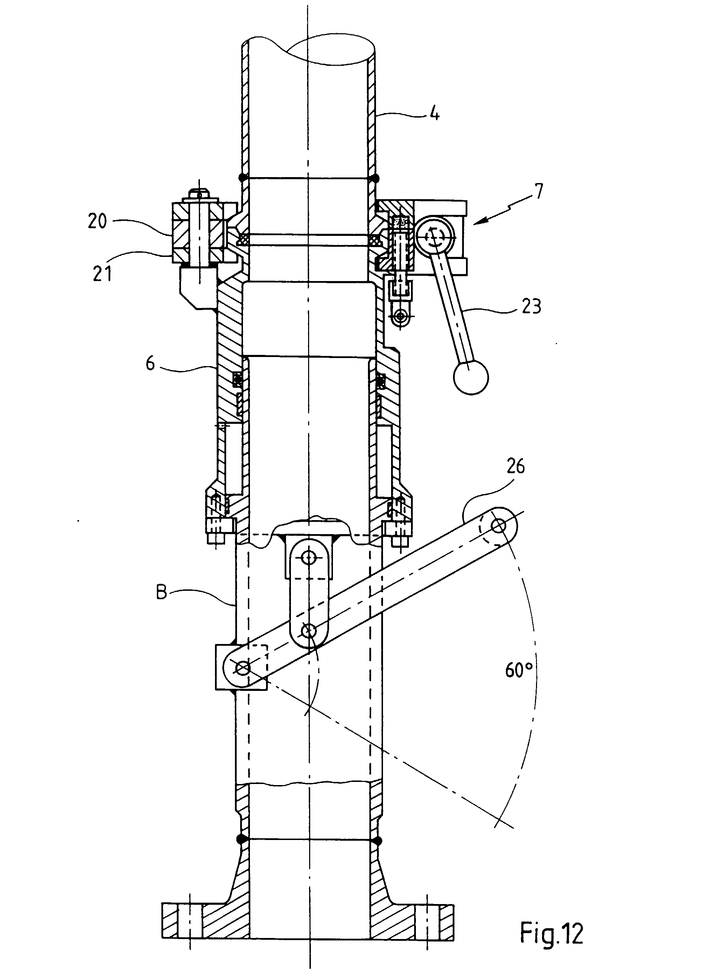

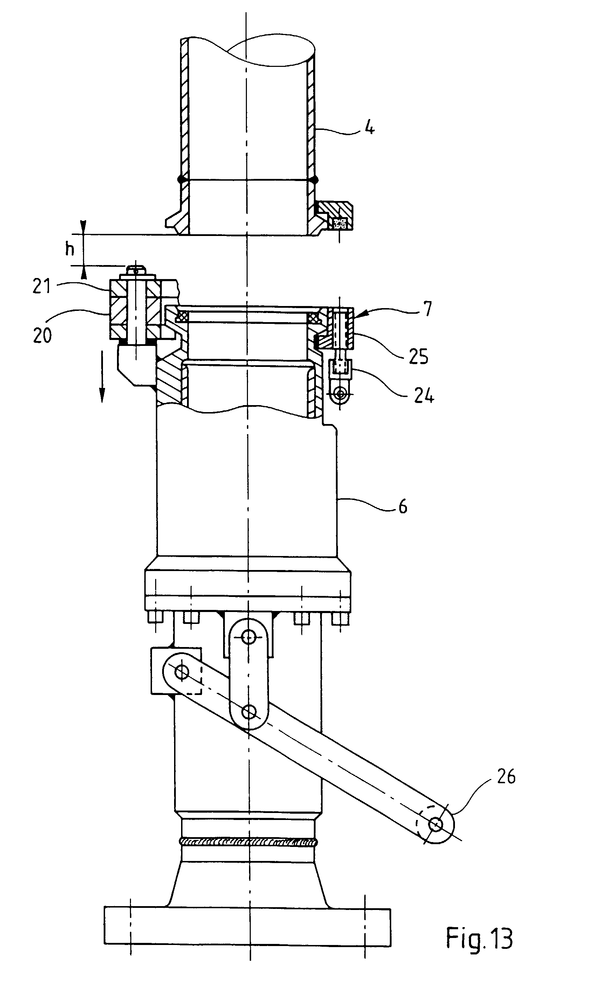

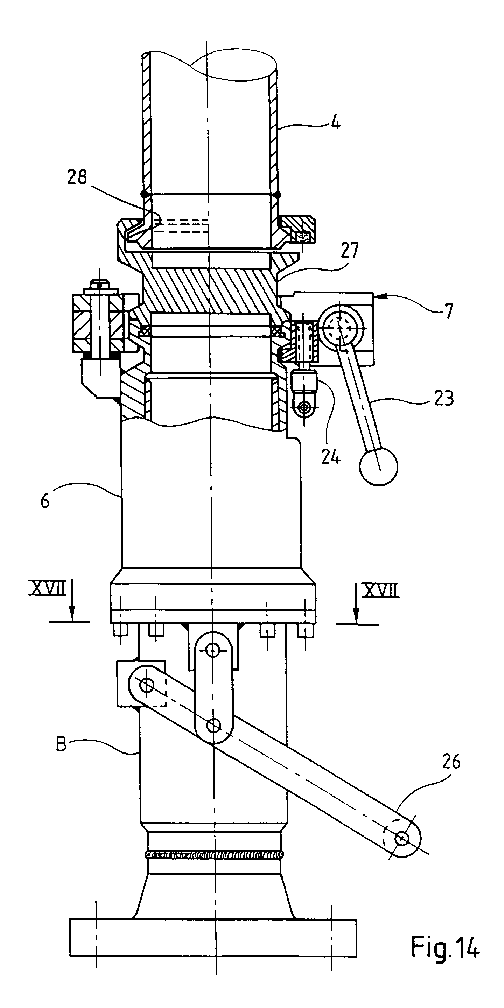

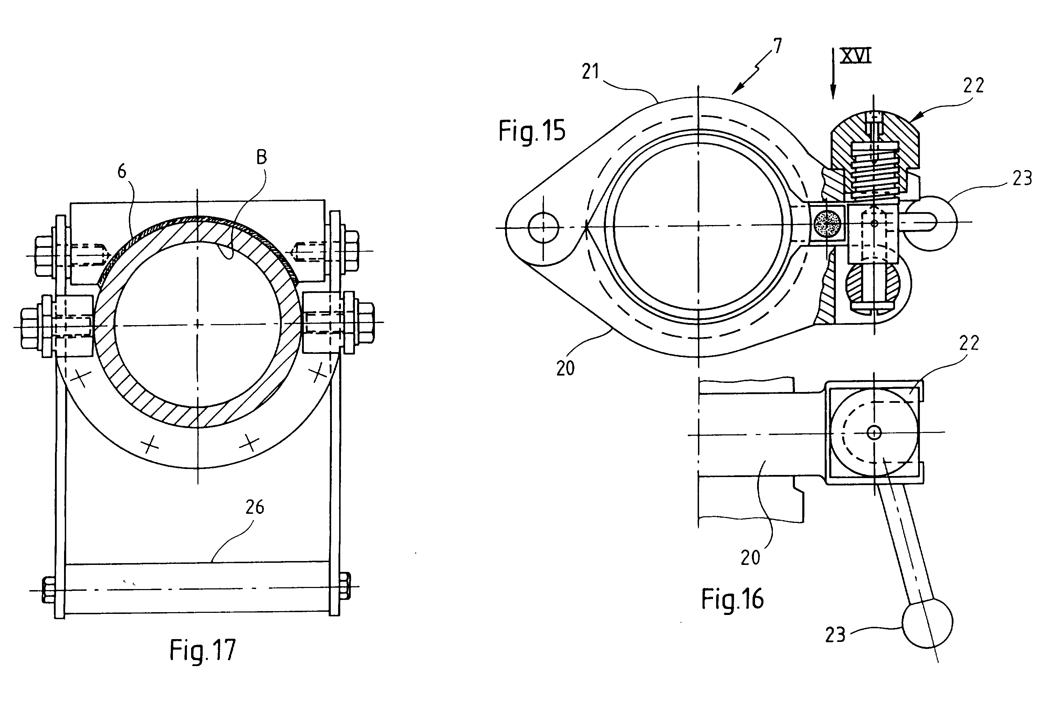

Cette installation comporte :
- un premier support 2 disposé verticalement auquel est fixée la pluralité de tronçons fixes, chacun à un niveau spécifique, entre des niveaux Hmin et Hmax ;
- une pluralité ordonnée de canalisations articulées 3A, 3B, 3C .... 3J ayant ce diamètre interne, déformables indépendamment les unes des autres dans des plans horizontaux superposés, à chaque premier tronçon étant connectée l'une, spécifique, des canalisations articulées,
- une première pluralité ordonnée de premiers tronçons d'accouplement 4A .... 4J ayant ce diamètre interne et présentant des brides d'accouplement longeant un plan fictif d'accouplement (P), le nombre de premiers tronçons d'accouplement étant égal au nombre de premiers tronçons fixes,
- un support 5 auquel est fixée la seconde pluralité ordonnée de seconds tronçons fixes,
- une seconde pluralité ordonnée de seconds tronçons d'accouplement 6A .... 6U ayant ce diamètre interne et présentant des brides d'accouplement parallèles au plan fictif d'accouplement P, le nombre de ces seconds tronçons d'accouplement étant égal au nombre des seconds tronçons fixes,
- une pluralité de coupleurs 7 (voir aussi les figures 12 à 17) adaptés chacun à accoupler un premier tronçon d'accouplement et un second tronçon d'accouplement,

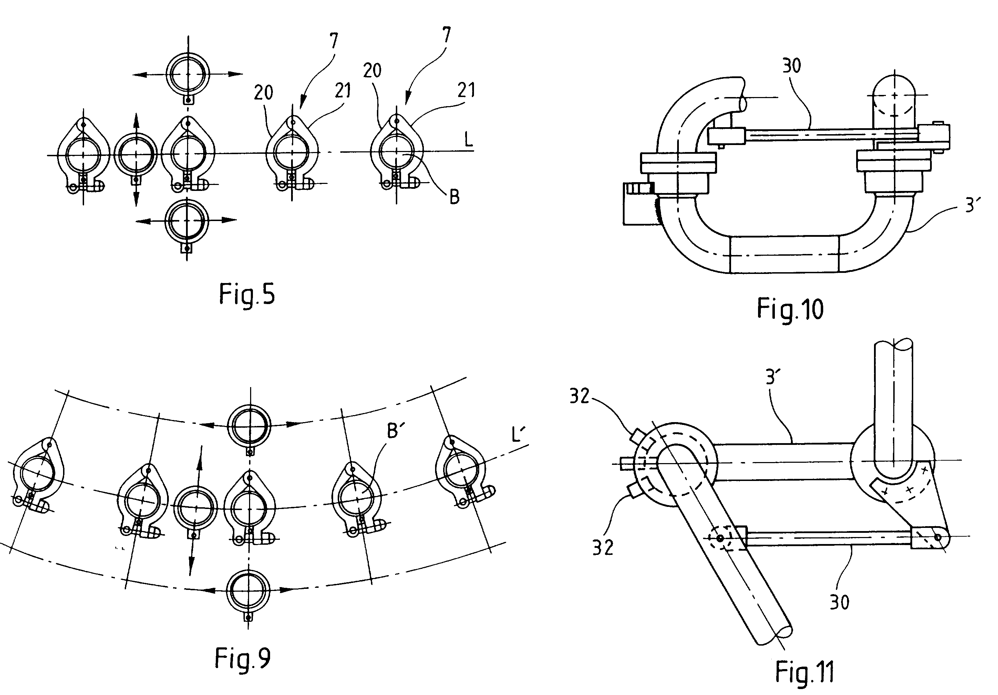

Selon des particularités de l'invention :
- chacun des seconds tronçons d'accouplement 6A ... 6U est connecté directement à l'un des seconds tronçons fixes B1 .... B21, ces seconds tronçons d'accouplement ayant des positions fixes parallèlement au plan fictif d'accouplement en étant réparties de façon régulière en regard d'une ligne de référence L sensiblement horizontale contenue dans ce pian P et ayant un niveau HL inférieur aux niveaux des premiers tronçons,
- chacune des canalisations articulées 3A ... 3Jest raccordée, à l'opposé du premier tronçon auquel elle est connectée, à une colonne tubulaire 8A ... 8J ayant ce diamètre interne et s'étendant verticalement jusqu'à l'un respectif des premiers tronçons d'accouplement 4A ... 4J, les longueurs respectives des colonnes tubulaires étant telles que les premiers tronçons d'accouplement soient tous sensiblement au même niveau (celui de la ligne de référence), chaque ensemble formé d'une canalisation, d'une colonne tubulaire et d'un premier tronçon d'accouplement étant muni de moyens de limitation en débattement de cet ensemble tout au long de la ligne de référence à l'intérieur d'une plage de débattement horizontal donnée de part et d'autre de cette ligne de référence (cela sera précisé plus loin),
- l'écartement entre seconds tronçons d'accouplement adjacents et la plage de débattement donnée est supérieur au diamètre des premiers tronçons d'accouplement (voir la figure 5).

Le plan fictif d'accouplement P est ici horizontal ; en variante, il pourrait être incliné, voire vertical.

Chaque canalisation articulée 3A ... 3J est ici formée de trois tronçons rigides articulés les uns aux autres.

La ligne de référence L est sensiblement rectiligne.

Les extrémités des canalisations articulées sont engagées, ici par l'intermédiaire de tiges 12 A .... 12J, dans des chariots respectifs 10A ... 10J munis de paliers pour les tiges et montés coulissants sur des rails 11A .... 11J sensiblement horizontaux et coplanaires dans un plan vertical PV sensiblement parallèle à la ligne de référence. Ces rails servent à supporter et guider le mouvement horizontal des chariots 10A .... 10J.

Ladite plage de débattement donnée est délimitée au moins en partie par des butées 14, 15 portées par lesdites extrémités et coopérant avec lesdits chariots (ici avec les paliers).

Pour rigidifier la liaison canalisation-colonne, il est prévu une entretoise inclinée 16B .... 16J fixée à l'extrémité de canalisation articulée et à la colonne associée.

Le système représenté comprend ainsi un ensemble de liaisons articulées composées de :
- un élément fixe A1, A2 .... avec sa bride de raccordement solidaire d'une structure support 5,
- trois éléments mobiles reliés entre eux par des rotations pour former des bras articulés 3A ...,
- le dernier élément se courbant vers le bas en une tubulure verticale destinée à être connectée sur l'une quelconque des tuyauteries fixes de sortie B1, B2 .... Il est équipé d'un système de guidage dans deux directions perpendiculaires : le long de, et transversalement à, la ligne sur laquelle les tuyauteries fixes de soutien sont disposées.

Dans le plan vertical PV chaque rail muni d'un chariot guide solidarisé à la tubulure ou colonne verticale permet le déplacement vers la droite ou vers la gauche sur la largeur de l'ensemble (sur toute la longueur de la ligne de référence).

Dans un plan perpendiculaire à PV, la tige 12A ... ou guide coulissant permet à la tubulure verticale de se déplacer d'avant en arrière sur une distance limitée. Ceci permet le positionnement de la tubulure verticale soit en avant des tuyauteries fixes, soit en arrière de ces tuyauteries.

La fonction de ce guide est importante dans la manoeuvre de l'ensemble, car en fonction des lignes déjà en service, et de la situation de la ligne à raccorder, la tubulure verticale ne pourra se déplacer sans interférence avec les lignes connectées que (voir la figure 5) :
- soit à l'intérieur (en avant) lorsque la ligne en manoeuvre est située à un niveau inférieur au niveau de la ligne connectée,
- soit à l'extérieur (en arrière) lorsque la ligne en manoeuvre est située à un niveau supérieur au niveau de la ligne connectée,

Les autres éléments de la liaison articulée sont disposés de telle sorte qu'il n'y a jamais d'interférence entre elles au cours de leur déplacement.

La longueur de la tubulure verticale est adaptée pour chaque liaison de façon à ce que le point de raccordement soit toujours au niveau du coupleur de raccordement sur les tuyauteries fixes, côté sortie de l'installation.

Ces tuyauteries fixes de sortie, disposées en ligne, sont équipées de deux dispositifs (voir les figures 12 à 17).

Le premier est un coupleur rapide permettant la connexion et la déconnexion de la tubulure mobile verticale à la tuyauterie fixe. Ce coupleur est composé de deux mâchoires ou demi-colliers 20-21 .... articulés autour d'un axe fixe perpendiculaire au plan d'accouplement P et d'un système vis-écrou 22 de verrouillage et de serrage rapide (vis à grand pas). Ce principe permet l'ouverture du coupleur en deux temps :
- desserrage des deux demi-colliers en plaçant la poignée de manoeuvre 23 dans la position d'ouverture. Le coupleur n'est plus étanche mais les tuyauteries sont toujours maintenues en place pour une question de sécurité (ouverture accidentelle d'une ligne sous pression),
- ouverture des deux demi-colliers après pivotement du système vis-écrou 22.

Un détecteur inductif 24 solidaire de la partie 25 sur laquelle sont articulés des demi-colliers permet la détection et l'identification de la tubulure verticale raccordée.

L'ensemble coupleur est avantageusement monté sur une section télescopique constituant l'un des seconds tronçons d'accouplement précités commandée en positions haute et basse par un levier 26 articulé transversalement à l'un des tronçons fixes B ....

Ce mouvement permet l'écartement de la bride de raccordement du coupleur par rapport à la bride de raccordement située sur la tubulure verticale, pour permettre le déplacement de cette tubulure sans interférence avec le coupleur.

Une pièce d'obturation 27 adaptée pour être serrée par le coupleur obture hermétiquement une ligne lorsqu'elle doit rester hors service. Dans cette même pièce, une gorge de guidage 28 maintient la tubulure verticale non utilisée en position de repos.

Cette fonction d'obturation est également intéressante pour une question de sécurité en cas de pressurisation accidentelle d'une ligne non utilisée, ou d'envoi de racleur.

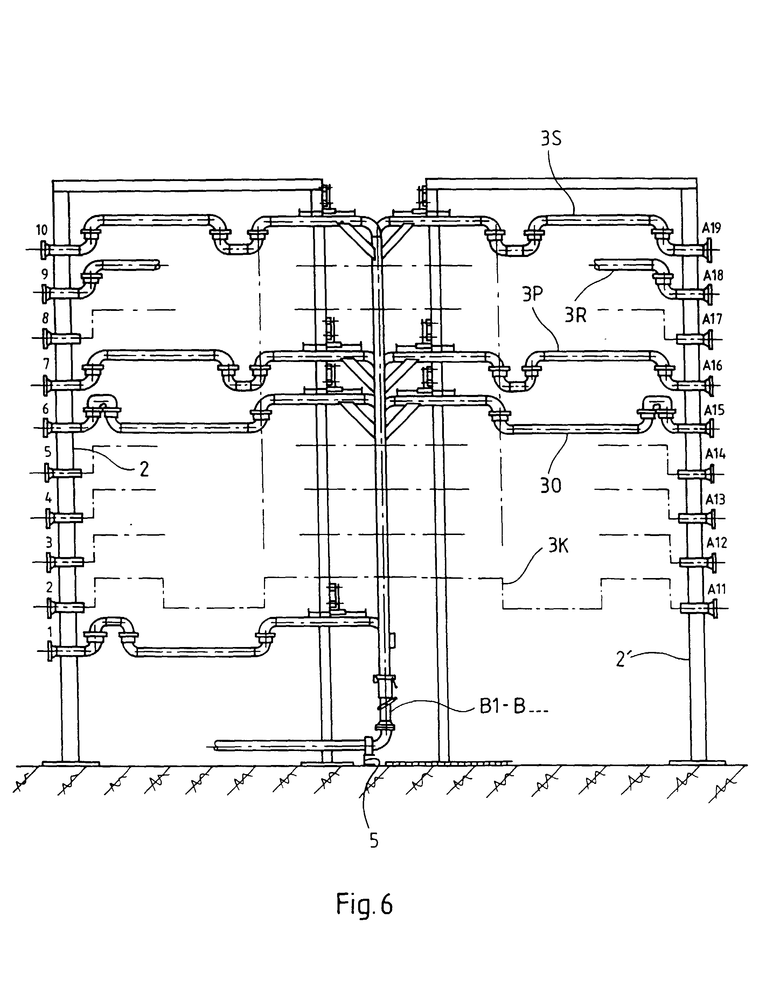

En variante, lorsque le nombre de tubulures verticales doit être supérieur à dix, afin d'éviter une longueur de tubulure verticale trop importante, un deuxième lot d'entrées et de canalisations peut être installé en opposition au premier (voir la figure 6) de part et d'autre de la rangée des tuyauteries fixes de sorties B ....

Une séquence de connexion peut se décrire comme suit, lorsque la ligne mobile (entrée) n° X doit être connectée à la ligne fixe n° Y ; la ligne mobile se trouve en position de repos sur la pièce d'obturation.
1. L'opérateur dégage la tubulure verticale vers l'arrière, ce qui lui permet de guider cette tubulure vers la droite ou vers la gauche en fonction de la position de la ligne fixe n° Y.
2. Pour atteindre cette position, il faut éviter toute interférence avec les lignes qui sont en service ou en position de repos, d'autre part l'entraxe des lignes fixes est suffisant pour permettre le passage avant-arrière d'une tubulure verticale entre deux lignes adjacentes en service (cas extrême).
   L'opérateur entraîne la tubulure verticale, et en fonction des lignes connectées rencontrées sur son parcours, les contourne par l'avant ou par l'arrière.
3. Raccordement de la tubulure verticale mobile à la tuyauterie fixe :
   - ouverture du coupleur,
   - approche de la bride de raccordement de la section télescopique à l'aide du levier de manoeuvre,
   - fermeture des deux demi-colliers du coupleur,
   - mise en place et serrage du système vis-écrou.

Pour la déconnexion, opération inverse avec mise en place de la pièce d'obturation.

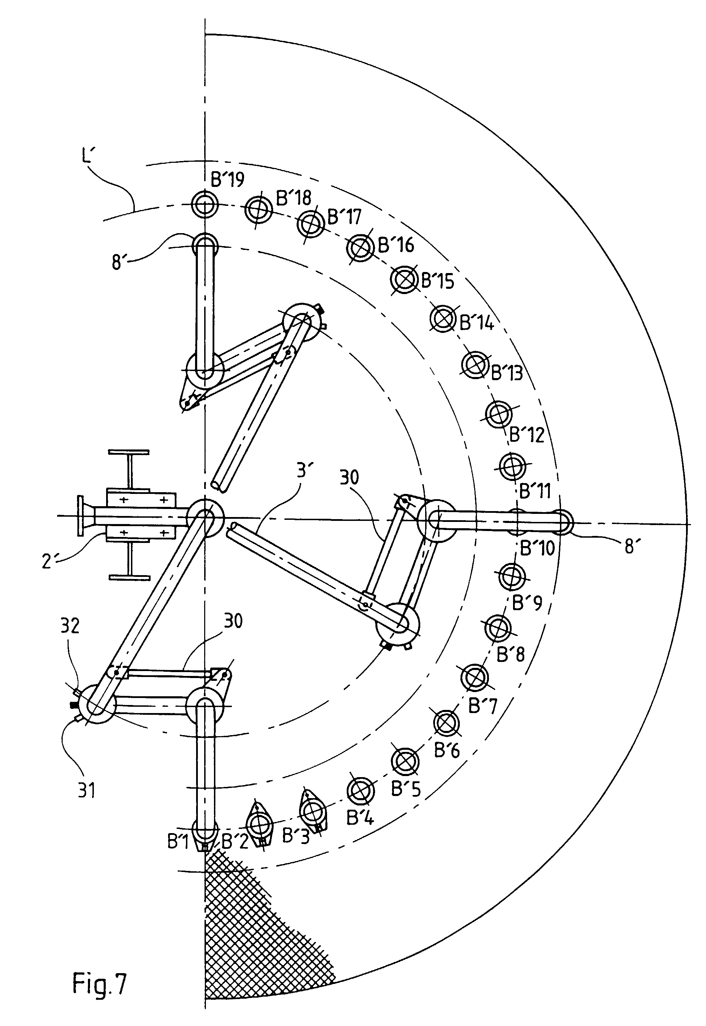

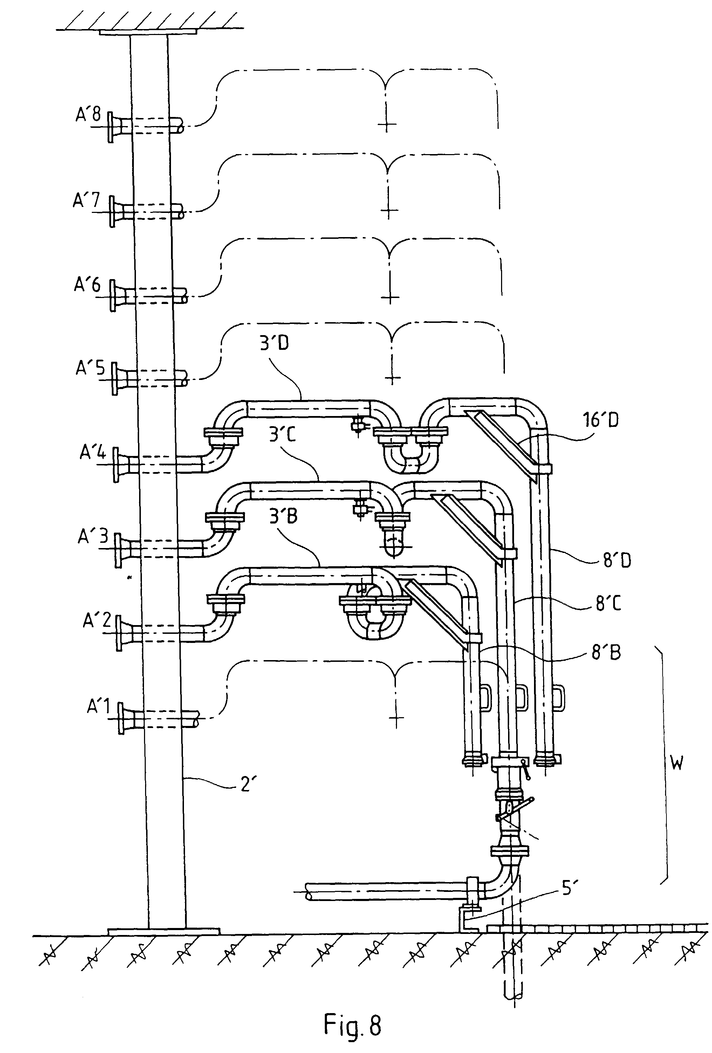

Une variante de réalisation représentée aux figures 7 à 9 (avec addition aux numéros de référence d'un indice "prime" consiste à :
- supprimer les guides horizontaux,
- installer les lignes de sortie en cercle autour d'un point central où se situe la première articulation (fixe) des canalisations articulées,
- équiper les canalisations articulées 3' d'une biellette 30 solidarisant le tronçon externe au tronçon interne, en parallèle sur le tronçon médian en sorte de former au moins approximativement un parallélogramme déformable ou pantographe,
- installer des butées de limitation de débattement de la tubulure verticale dans le plan perpendiculaire à la rotation fixe. Ces butées 31, 32 limitent le débattement à la position de croisement intérieur et extérieur.

Le fonctionnement se déduit de ce qui a été dit pour le premier mode de réalisation.

Les avantages de cette variante sont les suivants :
- réduction de coût (suppression des systèmes de guidage)
- le pantographe permet une rigidité de la liaison en rendant solidaire le tronçon portant la tubulure verticale de raccordement, en lui donnant une orientation fixe par rapport au centre du cercle, de préférence radiale,
- la manoeuvre droite-gauche n'entraîne que la première rotation fixe,
- la manoeuvre avant-arrière se fait toujours en poussant ou en tirant dans un axe qui passe toujours par la première rotation fixe. Ceci évite toute force parasite qui aurait tendance à entraîner l'ensemble de la liaison dans un sens ou dans un autre (droite ou gauche).

Toutefois, du fait de la suppression du guidage horizontal, la longueur des liaisons articulées est limitée et par conséquent le nombre possible de points de raccordement fixe est faible, mais il y a de nombreuses applications où cela n'est pas rédhibitoire.

Dans les figures, la référence W représente la zone où se déplace un opérateur. Les premiers tronçons d'accouplement 4A ... sont avantageusement munis de poignée 40.

A titre d'exemples de détails de réalisation :
- l'installation de la figure 1 à 10 entrées et 21 sorties tandis que, dans l'exemple dédoublé de la figure 6, le nombre d'entrées est de près du double (19) (pour laisser subsister une zone suffisante pour l'opérateur) : il y a flexibilité en fonction des besoins,
- les rails ont par exemple une longueur de 5 m pour 21 sorties espacées de 0,25 m ; la plage totale de débattement est d'environ 0,37 m pour un encombrement transversal des coupleurs d'environ 0,2 m et une section de colonne d'environ 0,1 m,
- la longueur des deux premiers tronçons de canalisations articulées est de 1,7 m tandis que le troisième tronçon a une largeur de 1,2 m,
- la hauteur totale est de 6 m avec un niveau minimale d'environ 1,15 m et une hauteur de 0,9 m pour le plan d'affrontement,
- les entretoises inclinées 16B ... 16J comportent avantageusement des butées antichoc en polyuréthanne,
- dans la configuration circulaire, les tronçons de canalisation ont, à partir du centre, des longueurs respectives de 1,05 m, 0,525 m et 0,6 m et l'écartement angulaire des sorties est de 10° pour une ligne de référence de 1,5 m de rayon,
- le débattement de la canalisation articulée est déterminé par une butée liée au tronçon intermédiaire adaptée à balayer un secteur angulaire bordé par deux butées solidaires du tronçon interne,
- la course télescopique est de 50 mm.

Il va de soi que la description qui précède n'a été proposée qu'à titre d'exemple non limitatif et que de nombreuses variantes peuvent être proposées par l'homme de l'art sans sortir du cadre de l'invention.

C'est ainsi par exemple que l'on peut, pour de faibles longueurs de canalisations (faible nombre de sorties B) supprimer les guides supports même dans les formes de réalisation des figures 1 à 6. En variante, on peut prévoir des supports même dans la configuration ronde.

Le fait de choisir un plan d'accouplement vertical peut avoir pour avantage de pouvoir se dispenser du tronçon télescopique, mais le débattement que doit avoir chaque colonne est augmenté en conséquence.

## Revendications

1. Installation de connexion sélective provisoire de l'un quelconque d'une pluralité ordonnée de premiers tronçons fixes (A1 ... A10 ; A'1 ...) ayant un même diamètre interne, à l'un quelconque d'une pluralité ordonnée de seconds tronçons fixes (B1 ... ; B'1 ...) ayant ce diamètre interne comportant :
- un premier support (2, 2') disposé verticalement auquel est fixée la pluralité de tronçons fixes, chacun à un niveau spécifique,
- une pluralité ordonnée de canalisations articulées (3A ... ; 3'A) ayant ce diamètre interne, déformables indépendamment les unes des autres dans des plans horizontaux superposés, à chaque premier tronçon étant connectée l'une, spécifique, des canalisations articulées,
- une première pluralité ordonnée de premiers tronçons d'accouplement (4A ... ; 4'A) ayant ce diamètre interne et présentant des brides d'accouplement longeant un plan fictif d'accouplement (P), le nombre de premiers tronçons d'accouplement étant égal au nombre de premiers tronçons fixes,
- un support (5, 5') auquel est fixée la seconde pluralité ordonnée de seconds tronçons fixes,
- une seconde pluralité ordonnée de seconds tronçons d'accouplement (6A ... ; 6'A) ayant ce diamètre interne et présentant des brides d'accouplement parallèles au plan fictif d'accouplement, le nombre de ces seconds tronçons d'accouplement étant égal au nombre des seconds tronçons fixes,
- une pluralité de coupleurs (20, 21) adaptés chacun à accoupler un premier tronçon d'accouplement et un second tronçon d'accouplement,
cette installation étant caractérisée en ce que :
- chacun des seconds tronçons d'accouplement (6A ... ; 6'A) est connecté directement à l'un des seconds tronçons fixes (B1 ... ; B'1 ...), ces seconds tronçons d'accouplement ayant des positions fixes parallèlement au plan fictif d'accouplement en étant réparties de façon régulière en regard d'une ligne de référence (L, L') sensiblement horizontale contenue dans ce plan et ayant un niveau (HL) inférieur aux niveaux des premiers tronçons,
- chacune des canalisations articulées est raccordée, à l'opposé du premier tronçon auquel elle est connectée, à une colonne tubulaire (8A ... ; 8'A) ayant ce diamètre interne et s'étendant verticalement jusqu'à l'un respectif des premiers tronçons d'accouplement, les longueurs respectives des colonnes tubulaires étant telles que les premiers tronçons d'accouplement soient tous sensiblement au même niveau, chaque ensemble formé d'une canalisation, d'une colonne tubulaire et d'un premier tronçon d'accouplement étant muni de moyens de limitation en débattement de cet ensemble tout au long de la ligne de référence à l'intérieur d'une plage de débattement horizontal donnée de part et d'autre de cette ligne de référence,
- l'écartement entre seconds tronçons d'accouplement adjacents et la plage de débattement donnée étant supérieur au diamètre des premiers tronçons d'accouplement.

2. Installation selon la revendication 1, caractérisée en ce que le plan fictif d'accouplement (P) est horizontal.

3. Installation selon la revendication 1 ou la revendication 2, caractérisée en ce que chaque canalisation articulée (3A ... ; 3'A ...) est formée de trois tronçons rigide articulés les uns aux autres.

4. Installation selon la revendication 1 ou la revendication 3, caractérisée en ce que la ligne de référence (L) est sensiblement rectiligne.

5. Installation selon la revendication 4, caractérisée en ce que les extrémités des canalisations articulées sont engagées dans des chariots respectifs (10A ...) montés coulissants sur des rails (11A...) sensiblement horizontaux et coplanaires dans un plan vertical sensiblement parallèle à la ligne de référence.

6. Installation selon la revendication 5, caractérisée en ce que ladite plage de débattement donnée est délimitée au moins en partie par des butées (14, 15) portées par lesdites extrémités et coopérant avec lesdits chariots.

7. Installation selon l'une quelconque des revendications 1 à 6, cararactérisée en ce que une entretoise inclinée (16B ...) est fixée à l'extrémité de chaque canalisation articulée et à la colonne associée et porte des butées anti-choc.

8. Installation selon l'une quelconque des revendications 4 à 7, caractérisée en ce que le support vertical et la pluralité de premiers tronçons fixes sont répartis en deux lots disposés de part et d'autre d'un plan vertical passant par la ligne rectiligne de référence.

9. Installation selon l'une quelconque des revendications 1 à 3, caractérisée en ce que la ligne de référence (L') est une portion de cercle.

10. Installation selon la revendication 9, caractérisée en ce que chaque canalisation articulée est formée de trois tronçons rigides articulés et comporte une biellette d'entretoisement (30) articulée sur les tronçons rigides extrêmes de même longueur que le tronçon rigide médian et formant avec des tronçons rigides un pantographe.

11. Installation selon la revendication 10, caractérisée en ce que le tronçon rigide extrême auquel est connecté une colonne tubulaire est orienté radialement.

12. Installation selon l'une quelconque des revendications 1 à 11, caractérisée en ce que les seconds tronçons d'accouplement (6A ..., 6'A) sont montés de façon télescopique sur les seconds tronçons fixes, perpendiculairement au plan fictif d'accouplement.

13. Installation selon la revendication 12, caractérisée en ce que ces seconds tronçons sont munis de levier de manoeuvre (26) qui sont basculants.

14. Installation selon la revendication 12 ou la revendication 13, caractérisée en ce que les seconds tronçons d'accouplement comportent deux mâchoires (20, 21) articulées en de premières extrémités sur lesdits seconds tronçons d'accouplement perpendiculairement au plan fictif d'accouplement et un dispositif de verrouillage (22) adapté à maintenir de secondes extrémités de ces mâchoires en une configuration fermée.

15. Installation selon la revendication 14, caractérisée en ce que ce dispositif de verrouillage (22) comprend des moyens de serrage.

16. Installation selon la revendication 15, caractérisée en ce que les moyens de serrage sont commandés par un levier de manoeuvre (23).

17. Installation selon l'une quelconque des revendications 14 à 16, caractérisée en ce que le dispositif de verrouillage est articulé sur la seconde extrémité de l'une des mâchoires.

18. Installation selon l'une quelconque des revendications 12 à 17, caractérisés en ce que les seconds tronçons d'accouplement comportent des détecteurs d'identification (24) pour identifier les premiers tronçons d'accouplement.

19. Installation selon l'une quelconque des revendications 12 à 18, caractérisée en ce qu'un bouchon d'obturation est interposé entre un premier tronçon d'accouplement et un second tronçon d'accouplement maintenu en position basse.

## Patentansprüche

1. Anlage zum provisorischen selektiven Verbinden eines beliebigen einer geordneten Mehrzahl erster fester Rohrstücke (A1 ...A10; A'1 ...) mit einem gleichen Innendurchmesser mit einem beliebigen einer geordneten Mehrzahl zweiter fester Rohrstücke (B1 ...; B'1 ...) mit diesem Innendurchmesser, welche umfaßt:
- einen ersten vertikal angeordneten Träger (2, 2'), an dem die Mehrzahl von festen Rohrstücken, jedes an einem spezifischen Niveau, befestigt ist,
- eine geordnete Mehrzahl von gelenkigen Rohrleitungen (3A ...; 3'A) mit diesem Innendurchmesser, die unabhängig voneinander in übereinanderliegenden horizontalen Ebenen verformbar sind, wobei mit jedem ersten Rohrstück eine spezifische der gelenkigen Rohrleitungen verbunden ist,
- eine erste geordnete Mehrzahl von ersten Kupplungsrohrstücken (4A ...; 4'A), die diesen Innendurchmesser haben und Kupplungsflansche aufweisen, die entlang einer fiktiven Kupplungsebene (P) liegen, wobei die Zahl von ersten Kupplungsrohrstücken gleich der Zahl von ersten festen Rohrstücken ist,
- einen Träger (5, 5'), an dem die zweite geordnete Mehrzahl von zweiten festen Rohrstücken befestigt ist,
- eine zweite geordnete Mehrzahl von zweiten Kupplungsrohrstücken (6A ....; 6'A), die diesen Innendurchmesser haben und Kupplungsflansche parallel zur fiktiven Kupplungsebene aufweisen, wobei die Zahl dieser zweiten Kupplungsrohrstücke gleich der Zahl der zweiten festen Rohrstücke ist,
- eine Mehrzahl von Kupplern (20, 21), die eingerichtet sind, um jeweils ein erstes Kupplungsrohrstück und ein zweites Kupplungsrohrstück zu kuppeln,
wobei die Anlage dadurch gekennzeichnet ist, daß
- jedes der zweiten Kupplungsrohrstücke (6A ...; 6'A) direkt an eines der zweiten festen Rohrstücke (B1 ...; B'1 ...) angeschlossen ist, wobei diese zweiten Kupplungsrohrstücke feste Positionen parallel zur fiktiven Kupplungsebene haben und regelmäßig gegenüber einer im wesentlichen horizontalen Referenzlinie (L, L') verteilt sind, die in dieser Ebene enthalten ist und ein niedrigeres Niveau (HL) als das Niveau der ersten Rohrstücke hat,
- jede der gelenkigen Rohrleitungen abgewandt vom ersten Rohrstück, an das sie angeschlossen ist, mit einer rohrförmigen Kolonne (8A ...; 8'A) verbunden ist, die diesen Innendurchmesser hat und sich vertikal bis zu jeweils einem der ersten Kupplungsrohrstücke erstreckt, wobei die jeweiligen Längen der rohrförmigen Kolonnen so sind, daß die ersten Kupplungsrohrstücke alle im wesentlichen auf gleichem Niveau sind, wobei jede aus einer Rohrleitung, einer rohrförmigen Kolonne und einem ersten Kupplungsrohrstück gebildete Anordnung mit Mitteln zum Begrenzen der Bewegungsfreiheit dieser Anordnung entlang der Referenzlinie innerhalb eines gegebenen horizontalen Bewegungsbereichs beiderseits dieser Referenzlinie versehen ist,
- der Abstand zwischen benachbarten zweiten Rohrstücken und der gegebene Bewegungsbereich großer als der Durchmesser der ersten Kupplungsrohrstücke sind.

2. Anlage nach Anspruch 1, dadurch gekennzeichnet, daß die fiktive Kupplungsebene (P) horizontal ist.

3. Anlage nach Anspruch 1 oder 2, dadurch gekennzeichnet, daß jede gelenkige Rohrleitung (3A ...; 3'A...) aus drei miteinander gelenkig verbundenen steifen Rohrstücken gebildet ist.

4. Anlage nach Anspruch 1 oder Anspruch 3, dadurch gekennzeichnet, daß die Referenzlinie (L) im wesentlichen geradlinig ist.

5. Anlage nach Anspruch 4, dadurch gekennzeichnet, daß die Enden der gelenkigen Rohrleitungen jeweils in Wagen (10A ...) im Eingriff sind, die gleitend auf im wesentlichen horizontalen und koplanaren Schienen (11A ...) in einer vertikalen Ebene im wesentlichen parallel zur Referenzlinie montiert sind.

6. Anlage nach Anspruch 5, dadurch gekennzeichnet, daß der gegebene Bewegungsbereich wenigstens teilweise durch Anschläge (14, 15) begrenzt ist, die von den Enden getragen sind und mit den Wagen zusammenwirken.

7. Anlage nach einem der Anspniche 1 bis 6, dadurch gekennzeichnet, daß eine geneigte Strebe (16B ...) am Ende jeder gelenkigen Rohrleitung und der zugeordneten Kolonne befestigt ist und stoßaufnehmende Anschläge trägt.

8. Anlage nach einem der Ansprüche 4 bis 7, dadurch gekennzeichnet, daß der vertikale Träger und die Mehrzahl von ersten festen Rohrstücken auf zwei Sätze verteilt sind, die beiderseits einer vertikalen Ebene angeordnet sind, die durch die geradlinige Referenzlinie verläuft.

9. Anlage nach einem der Ansprüche 1 bis 3, dadurch gekennzeichnet, daß die Referenzlinie (L') ein Kreisabschnitt ist.

10. Anlage nach Anspruch 9, dadurch gekennzeichnet, daß jede gelenkige Rohrleitung aus drei gelenkigen steifen Rohrstücken gebildet ist und eine Verstrebungsstange (30) aufweist, die an die äußeren steifen Rohrstücke von gleicher Länge wie das mittlere steife Rohrstück angelenkt ist und mit den steifen Rohrstücken einen Pantographen bildet.

11. Anlage nach Anspruch 10, dadurch gekennzeichnet, daß das äußere steife Rohrstück, an das eine rohrförmige Kolonne angeschlossen ist, radial orientiert ist.

12. Anlage nach einem der Ansprüche 1 bis 11, dadurch gekennzeichnet, daß die zweiten Kupplungsrohrstücke (6A ..., 6'A) teleskopisch auf den zweiten festen Rohrstücken senkrecht zur fiktiven Kupplungsebene montiert sind.

13. Anlage nach Anspruch 12, dadurch gekennzeichnet, daß die zweiten Rohrstücke mit kippbaren Betätigungshebeln (26) versehen sind.

14. Anlage nach Anspruch 12 oder Anspruch 13, dadurch gekennzeichnet, daß die zweiten Kupplungsrohrstücke zwei Backen (20, 21), die an ersten Enden an die zweiten Kupplungsrohrstücke senkrecht zur fiktiven Kupplungsebene angelenkt sind, und eine Verriegelungsvorrichtung (22) aufweisen, die eingerichtet ist, um zweite Enden dieser Backen in einer geschlossenen Konfiguration zu halten.

15. Anlage nach Anspruch 14, dadurch gekennzeichnet, daß die Verriegelungsvorrichtung (22) Spannmittel umfaßt.

16. Anlage nach Anspruch 15, dadurch gekennzeichnet, daß die Spannmittel durch einen Betätigungshebel (23) gesteuert werden.

17. Anlage nach einem der Ansprüche 14 bis 16, dadurch gekennzeichnet, daß die Verriegelungsvorrichtung an das zweite Ende einer der Backen angelenkt ist.

18. Anlage nach einem der Ansprüche 12 bis 17, dadurch gekennzeichnet, daß die zweiten Kupplungsrohrstücke Identifikationsdetektoren (24) zum Identifizieren der ersten Kupplungsrohrstücke aufweisen.

19. Anlage nach einem der Ansprüche 12 bis 18, dadurch gekennzeichnet, daß ein Verschlußstopfen zwischen einem ersten Kupplungsrohrstück und einem zweiten, in niedriger Position gehaltenen Kupplungsrohrstück angeordnet ist.

## Claims

1. Installation for provisional selective connection of any one of an ordered plurality of first fixed sections (A1, ..., A10; A'1, etc) all having the same inside diameter to any one of an ordered plurality of second fixed sections (B1, etc; B'1, etc) all having the same inside diameter as the first fixed sections, including:
- a vertical first support (2, 2') to which the plurality of fixed sections is fixed, each at a specific level,
- an ordered plurality of articulated pipes (3A, etc; 3'A) all having the same inside diameter as the first and second fixed sections, deformable independently of each other in stacked horizontal planes, a specific articulated pipe being connected to each first section,
- a first ordered plurality of first coupling sections (4A, etc; 4'A) all having the same inside diameter as the first and second fixed sections and coupling flanges in an imaginary coupling plane (P), the number of first coupling sections being equal to the number of first fixed sections,
- a support (5, 5') to which the second ordered plurality of second fixed sections is fixed,
- a second ordered plurality of second coupling sections (6A, etc; 6'A) all having the same inside diameter as the first and second fixed sections and coupling flanges parallel to the imaginary coupling plane, the number of second coupling sections being equal to the number of second fixed sections,
- a plurality of couplers (20, 21) each adapted to couple a first coupling section and a second coupling section,
which installation is characterised in that:
- each second coupling section (6A, etc; 6'A) is connected directly to a second fixed section (B1, etc; B'1, etc), said second coupling sections having fixed positions parallel to the imaginary coupling plane and being regularly arranged facing a substantially horizontal reference line (L, L') in said plane at a level (HL) below the level of the first sections,
- each articulated pipe is connected at the end opposite the end connected to the first section to which it is connected to a tubular column (8A, etc; 8'A) having the same inside diameter as the first and second fixed sections and extending vertically as far as a respective first coupling section, the respective lengths of the tubular columns being such that the first coupling sections are all at substantially the same level, each combination of a pipe, a tubular column and a first coupling section being provided with means for limiting movement of said combination along the whole of the reference line to within a given range of horizontal movement to either side of said reference line,
- the distance between adjacent second coupling sections and the given range of movement being greater than the diameter of the first coupling sections.

2. Installation according to claim 1 characterised in that the imaginary coupling plane (P) is horizontal.

3. Installation according to claim 1 or claim 2 characterised in that each articulated pipe (3A, etc; 3'A, etc) is formed of three rigid sections articulated to each other.

4. Installation according to claim 1 or claim 3 characterised in that the reference line (L) is substantially rectilinear.

5. Installation according to claim 4 characterised in that the ends of the articulated pipes are inserted in respective carriages (10A, etc) sliding on substantially horizontal coplanar rails (llA, etc) in a vertical plane substantially parallel to the reference line.

6. Installation according to claim 5 characterised in that said given range of movement is delimited at least in part by abutments (14, 15) carried by said ends and cooperating with said carriages.

7. Installation according to any one of claims 1 to 6 characterised in that an inclined spacer (16B, etc) is fixed to the end of each articulated pipe and to the associated column and carries buffers.

8. Installation according to any one of claims 4 to 7 characterised in that the vertical support and the plurality of first fixed sections are divided into two sets on respective sides of a vertical plane through the rectilinear reference line.

9. Installation according to any one of claims 1 to 3 characterised in that the reference line (L') is part of a circle.

10. Installation according to claim 9 characterised in that each articulated pipe is formed of three rigid sections articulated together and includes a spacer link (30) articulated to the end rigid sections the same length as the median rigid section and forming a pantograph with the rigid sections.

11. Installation according to claim 10 characterised in that the end rigid section to which a tubular column is connected is oriented radially.

12. Installation according to any one of claims 1 to 11 characterised in that the second coupling sections (6A, etc; 6'A) are mounted telescopically on the second fixed sections, perpendicularly to the imaginary coupling plane.

13. Installation according to claim 12 characterised in that said second sections are provided with pivoting manoeuvring levers (26).

14. Installation according to claim 12 or claim 13 characterised in that the second coupling sections include two jaws (20, 21) articulated at first ends to said second coupling sections perpendicular to the imaginary coupling plane and a locking device (22) adapted to hold second ends of said jaws in a closed configuration.

15. Installation according to claim 14 characterised in that said locking device (22) comprises clamping means.

16. Installation according to claim 15 characterised in that the clamping means are operated by a lever (23).

17. Installation according to any one of claims 14 to 16 characterised in that the locking device is articulated to the second end of one jaw.

18. Installation according to any one of claims 12 to 17 characterised in that the second coupling sections include sensors (24) for identifying the first coupling sections.

19. Installation according to any one of claims 12 to 18 characterised in that a plug is disposed between a first coupling section and a second coupling section held in a bottom position.
